# EUROPEAN PATENT APPLICATION

(11) **EP 4 376 541 A1**
(43) Date of publication of application: **29.05.2024**
(21) Application number: 21950417.2
(22) Date of filing: 19.07.2021
(51) Int. Cl.: H04W 76/15, H04W 76/19, H04W 80/02

(54) **MULTI-LINK COMMUNICATION METHOD AND COMMUNICATION APPARATUS**

(71) Applicant: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2021/107200
(87) International publication number: WO 2023/000151

(57) **Abstract**

The present disclosure provides a multi-link communication method and communication apparatus. The communication method may comprise: determining a first message frame, the first message frame comprising information related to adding and/or deleting at least one connection; and sending the first message frame. By means of the technical solution provided in the exemplary embodiments of the present disclosure, the spectrum utilization rate can be improved.

## Description

### TECHNICAL FIELD

The disclosure relates to the field of wireless communication, and more specifically to, a method and an apparatus for communication on multiple links.

### BACKGROUND

At present, the study scope of the wireless fidelity (Wi-Fi) technology is 320MHz bandwidth transmissions, aggregation and coordination of multiple frequency bands, etc. It is expected that the speed and throughput may be increased by at least four times as compared with existing standard. Its main application scenarios are video transmissions, augmented reality (AR), virtual reality (VR), etc.

The aggregation and coordination of multiple frequency bands mean that devices communicate with each other on frequency bands of 2.4GHz, 5.8GHz, and 6GHz simultaneously. For the simultaneous communication among devices on multiple frequency bands, a new media access control (MAC) mechanism needs to be defined to manage the simultaneous communication. In addition, the aggregation and coordination of multiple frequency bands is expected to support low-latency transmissions.

A current maximum bandwidth to be supported in the aggregation and coordination of multiple frequency bands is 320MHz (160MHz+160MHz), in addition to 240MHz (160MHz+80MHz) and other bandwidths.

In the related art, a station (STA) and an access point (AP) may be a multi-link device (MLD), i.e., a device that supports a communication on multiple links, for example, transmitting and/or receiving data, commands, etc. Therefore, in the related art, there may be multiple links between the STA and the AP and the communication on multiple links between these two devices will be studied.

### SUMMARY

Various aspects of the disclosure will at least solve the above problems and/or deficiencies. Various embodiments of the disclosure provide the following technical solutions.

According to some embodiments of the disclosure, a method for communication on multiple links is provided. The method is performed by an access point supporting multi-link communication and includes: determining a first message frame, in which the first message frame includes information related to adding and/or deleting at least one link; and transmitting the first message frame.

According to some embodiments of the disclosure, a method for communication on multiple links is provided. The method is performed by a station supporting multi-link communication and includes: receiving a first message frame, in which the first message frame includes information related to adding and/or deleting at least one link; and performing a communication operation according to the first message frame.

According to some embodiments of the disclosure, an apparatus for communication on multiple links is provided. The apparatus is configured in an access point supporting multi-link communication and includes: a processing module configured to determine a first message frame, in which the first message frame includes information related to adding and/or deleting at least one link; and a transceiving module, configured to transmit the first message frame.

According to some embodiments of the disclosure, an apparatus for communication on multiple links is provided. The apparatus is configured in a station supporting multi-link communication and includes: a transceiving module, configured to receive a first message frame, in which the first message frame includes information related to adding and/or deleting at least one link; and a processing module, configured to perform a communication operation according to the first message frame.

According to some embodiments of the disclosure, an electronic device is provided. The electronic device includes a memory, a processor, and a computer program stored on the memory and runnable on the processor. When the computer program is executed by the processor, the method as described above is performed.

According to some embodiments of the disclosure, a computer-readable storage medium having a computer program stored thereon is provided. When the computer program is executed by a processor, the method as described above is performed.

The technical solutions according to the embodiments of the disclosure may improve a spectrum utilization rate.

### BRIEF DESCRIPTION OF THE DRAWINGS

The above and additional features according to embodiments of the disclosure will become more apparent by describing the embodiments of the disclosure in detail with reference to the accompanying drawings, in which:
FIG. 1 is an example diagram illustrating a scenario for communication on multiple links.
FIG. 2 is a flowchart illustrating a method for communication on multiple links according to some embodiments of the disclosure.
FIG. 3 is a flowchart illustrating a method for communication on multiple links according to some embodiments of the disclosure.
FIG. 4 is a block diagram illustrating an apparatus for communication according to of the disclosure.

### DETAILED DESCRIPTION

The following descriptions with reference to the accompanying drawings are provided to fully understand various embodiments of the disclosure as defined by the appended claims and their equivalents. Various embodiments of the disclosure include various details, but such details are considered to be exemplary only. In addition, descriptions of well-known techniques, functions, and constructions may be omitted for the sake of clarity and brevity.

Terms and words used in the disclosure are not limited to written meanings, but are used by inventors to enable a clear and consistent understanding of the disclosure. Therefore, for those skilled in the art, the descriptions of various embodiments of the disclosure are provided only for the purpose of illustration, but not for the purpose of limitation.

It should be understood that "a", "an", "said", and "the" in singular forms used herein may also include plural forms, unless clearly indicated in the context otherwise. It should be further understood that the word "include" used in the disclosure refers to the existence of described features, integers, steps, operations, elements, and/or assemblies, but does not exclude the existence or addition of one or more other features, integers, steps, operations, elements, assemblies, and/or groups thereof.

It will be understood that although the terms "first" and "second" and the like may be used herein to describe various elements, these elements should not be limited by these terms. These terms are only used to distinguish one element from another. Therefore, a first element discussed below may be referred to as a second element without departing from the teaching of the embodiments.

It should be understood that when an element is referred to as being "connected" or "coupled" to another element, it may be directly connected or coupled to other elements, or intervening elements may also exist. In addition, as used herein, "connected" or "coupled" may include wireless connection or wireless coupling. The term "and/or" or the expression "at least one of..." used herein includes any and all combinations of one or more related listed items.

Unless otherwise defined, all terms used herein, including technical terms and scientific terms, have the same meaning as generally understood by those skilled in the art to which this disclosure belongs.

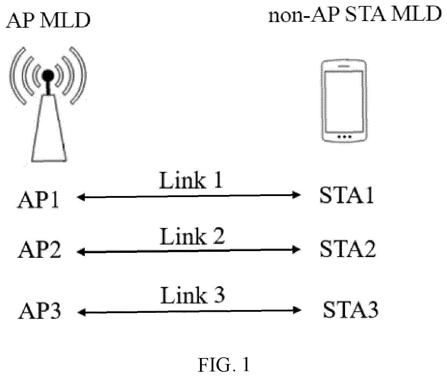

FIG. 1 is an example diagram illustrating a scenario for communication on multiple links.

In a wireless local area network, a basic service set (BSS) may include an access point (AP) and one or more stations (STAs) that communicate with the AP. The BSS may be connected to a distribution system (DS) through its AP and then accessed to another BSS, to form an extended service set (ESS).

The AP is a wireless switch of the wireless network or an access node of the wireless network. The AP device may be used as a wireless base station and mainly as a bridge to connect the wireless network and a wired network. The wired network and the wireless network are integrated using the AP.

The AP may include software applications and/or circuitries to enable other types of nodes in the wireless network to communicate with outside and inside of the wireless network via the AP. For example, the AP may be a terminal device or a network device equipped with a wireless fidelity (Wi-Fi) chip.

For example, the STAs may include, but are not limited to: cellular phones, smart phones, wearable devices, computers, personal digital assistants (PDAs), personal communication system (PCS) devices, personal information managers (PIMs), personal navigation devices (PNDs), global positioning systems, multimedia devices, Internet of Things (IoT) devices, or the like.

According to some embodiments of the disclosure, the AP and the STA may support a multi-link device (MLD), which may, for example, be denoted as an AP MLD and a non-AP STA MLD, respectively. For convenience of descriptions, in the following context, an example communication between an AP and a STA on multiple links is described, which is not limited according to some embodiments.

In FIG. 1, by way of illustration only, an AP MLD may be an AP supporting a multi-link communication function and a non-AP STA MLD may be an STA supporting a multi-link communication function. Referring to FIG. 1, the AP MLD may operate on three links, such as AP1, AP2, and AP3 illustrated in FIG. 1, and the non-AP STA MLD may also operate on three links, such as STA1, STA2, and STA3 illustrated in FIG. 1. In FIG. 1, for example, AP1 communicates with STA1 via Link1, similarly, AP2 communicates with STA2 via Link2, and AP3 communicate with STA3 via Link3, respectively. In addition, Link1 to Link3 may be multiple links at different frequencies, e.g., links at 2.4 GHz, 5 GHz, and 6 GHz, etc., or several links with same or different bandwidths at 2.4 GHz, 5 GHz, and 6 GHz. Moreover, there may be multiple channels on each link. However, it should be understood that the scenario for communication in FIG. 1 is only exemplary and the inventive concept is not limited thereto. For example, the AP MLD may be connected to multiple non-AP STA MI,Ds, or the AP may communicate with other types of STAs on each link.

In a current wireless communication, the AP MLD is required to be able to add or delete its affiliated AP(s) at any time. According to embodiments of the disclosure, a method for communication and an apparatus for communication, for the AP MLD adding or deleting its affiliated AP(s) (links), are provided.

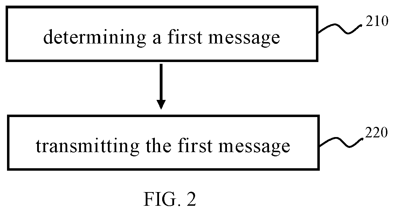

FIG. 2 is a flowchart illustrating a method for communication on multiple links according to some embodiments of the disclosure. The method for communication illustrated in FIG. 2 may be applied to an AP supporting multi-link communication, such as the AP MLD in FIG. 2.

Referring to FIG. 2, in step 210, a first message frame is determined, in which the first message frame includes information related to adding and/or deleting at least one link. According to some embodiments of the disclosure, the first message frame may be a beacon frame, a probe response frame, an association response frame, a re-association response frame, or the like, but the disclosure is not limited thereto, and the first message frame may be, for example, a newly defined action frame.

According to some embodiments of the disclosure, there are many ways for determining the first message frame. For example, the first message frame may be generated by the AP device according to at least one of: a network condition, a load condition, a hardware capability of a transmitting/receiving device, a service type, a related protocol provision, or the like, which are not specifically limited according to some embodiments of the disclosure. According to some embodiments of the disclosure, the first message frame may be further obtained from an external device by the AP device, which is not specifically limited according to some embodiments of the disclosure.

According to some embodiments of the disclosure, in the information related to adding and/or deleting at least one link, adding and/or deleting at least one link may refer to the AP MLD adding and/or deleting at least one affiliated AP. For example, in FIG. 1, at least one new AP (which may correspond to a new link) is added on the basis of AP1, AP2, and AP3 in FIG. 1, or at least one of AP1, AP2, and AP3 in FIG. 1 may be deleted.

In step 220, the first message frame is transmitted. For example, the first message frame may be transmitted on any link among the multiple links supported by the AP MLD, so as to notify a receiver (the non-AP STA MLD) of which link changes (adding and/or deleting) thought the information carried in the first message frame, so that the two parties may use the changed link to communicate.

According to some embodiments of the disclosure, the information related to adding and/or deleting at least one link may be carried in the first message frame in a form of an information element and the frame is transmitted in a broadcast form. For example, the information related to adding and/or deleting at least one link, carried in the first message frame, may be in a form of a multi-link information element, but the disclosure is not limited thereto, and the information may be carried in other ways or other types of information elements. In the following, for convenience of descriptions, the information related to adding and/or deleting at least one link is described in the form of the multi-link information element as an example. This information will be described in detail with reference to Table 1 to Table 4 below.

For example, the multi-link information element may have the format in Table 1 below.

**Table 1 multi-link information element format**

| | | | | | |
|---|---|---|---|---|---|
| Element ID | Length | Element ID Extension | Multi-Link Control | Common info | Link Info (At least one) |

In Table 1, Element ID may be set to a specific value to identify a multi-link information element. Length may indicate length information of a link information element. Element ID Extension is optionally present and used to identify an extension of a link information element. Multi-Link Control field, Common info field, and Link Info field may include the information related to adding and/or deleting at least one link. In addition, the multi-link information element in Table 1 is only exemplary, and the disclosure is not limited thereto.

According to some embodiments of the disclosure, the Multi-Link Control field may have a format in Table 2 below.

**Table 2 multi-link control field format**

| | | |
|---|---|---|
| Type(bit(s)) | Reserved(1 bit) | Bitmap present (12 bits) |

According to some embodiments of the disclosure, the multi-link information element may include a type identification for identifying reconfiguring the multi-link information element, for example, a Type subfield in Table 2. The type identification (Type) may be used to distinguish variants of the multi-link information element. Although it is in Table 2 that the type identification (Type) may have 3 bits, this is only exemplary and is not a limitation to the disclosure. The number of bits of the type identification (Type) may be changed according to the communication environment or communication standard. For example, when the type identification (Type) is set to, for example, but not limited to "0", it identifies a basic multi-link information element; when the type identification (Type) is set to, for example, but not limited to "1", it identifies a probe request multi-link information element; and when the type identification (Type) is set to, for example, but not limited to a specific value (for example, in a case that the type identification (Type) has 3 bits, the type identification (Type) is set to any value in "2-7"), it identifies to reconfigure the multi-link information element.

The Bitmap present subfield in Table 2 may be used to indicate whether there is an added and/or deleted link, but the disclosure is not limited thereto. For example, the Bitmap present subfield may also be used to indicate whether various subfields in the Common info field in Table 1 is present.

In addition, the Multi-Link Control field may also include one (or more) reserved bits.

According to some embodiments of the disclosure, the Bitmap present subfield may have a format in Table 3 below.

**Table 3 Bitmap present format**

| | | | | | | |
|---|---|---|---|---|---|---|
| MLD MAC address present | Add link present | Link count 1 | Delete link present | Link count 2 | NA | NA |

According to some embodiments of the disclosure, the information related to adding and/or deleting at least one link may include an MLD media access control (MAC) address presence identification, for example, an MLD MAC address present subfield in Table 3. The MLD MAC address presence identification (MLD MAC address present subfield) may be used to indicate a presence of an MLD MAC address in this information (the multi-link information element). The MLD MAC address may identify an MLD MAC address of the AP MLD. According to embodiments, an MLD (e.g., the AP MLD) may have a unique MLD MAC address identifier for identifying the MLD. The MLD MAC address presence identification may be correspondingly set according to whether at least one link is added and/or deleted. For example, the MLD MAC address presence identification (MLD MAC address present) may be set based on an Add link present subfield and a Delete link present subfield described below.

For example, in a case that there is an added link (for example, the Add link present subfield indicates that there is a newly added link), the MLD MAC address presence identification (MLD MAC address present) may be set to the first value (for example but not limited to "1") to indicate that the MLD MAC address is present in the information related to adding and/or deleting at least one link (multi-link information element). In this case, since the newly added link will be used for communication between the AP and the STA, the MLD MAC address needs to be carried in the multi-link information element. For example, the MLD MAC address may be used to negotiate session keys on the newly added link.

For example, where there is only a deleted link (e.g., the Delete link present subfield indicates that there is a link to be deleted, and the Add link present subfield indicates that there is no newly added link), the MLD MAC address presence identification (MLD MAC address present) may be set to a second value (such as but not limited to "0") to indicate that the MLD MAC address is not present in the information related to adding and/or deleting at least one link (multi-link information element). In this case, since the deleted link is no longer used for communication between the AP and the STA, the MLD MAC address may not be carried in the multi-link information element, so that the content carried in the multi-link information element may be simplified, to reduce the power consumption.

According to some embodiments of the disclosure, the information related to adding and/or deleting at least one link may include a first identification and/or a second identification. For example, the first identification may be the Add link present subfield in Table 3 and the second identification may be the Delete link present subfield in Table 3. In detail, the first identification (Add link present) may be used to identify an addition of a new link and the second identification (Delete link present) may be used to identify a deletion of an existing link.

According to some embodiments of the disclosure, the information related to adding and/or deleting at least one link may include a third identification and/or a fourth identification. For example, the third identification may be the Link count 1 subfield in Table 3 and the fourth identification may be the Link count 2 subfield in Table 3. In detail, the third identification (Link count 1) may be used to identify a number of one or more added links and the fourth identification (Link count 2) may be used to identify a number of one or more deleted links.

According to some embodiments of the disclosure, the Link Info field in Table 1 may be used to identify information of an added and/or deleted link. For example, the Link Info field may include a Link ID corresponding to the added and/or deleted link. For example, the Link ID may have multiple bits to identify combined information of a working frequency spectrum, bandwidth/channel, and a basis service set identifier (BSSID). For example, the Link Info field may include an MAC address of an AP corresponding to the added and/or deleted link. In addition, the Link Info field may also include a bit, which is used to identify whether the link represented by the current link information field is an added link or a deleted link.

For example, the first identification (Add link present) may be identified by a bit. For example, if it is set to a specific value (such as but not limited to, " 1"), it may indicate that a new link has been added, the third identification (Link count 1) may identify the number of one or more added links, and the information of the added link may be identified in the link information (Link Info) field.

For example, the second identification (Delete link present) may be identified by a bit. For example, if it is set to a specific value (such as but not limited to, "1 "), it may identify that an existing link is deleted, the fourth identification (Link count 2) may identify the number of one or more deleted links, and the information of the deleted link may be identified in the link information (Link Info) field.

In Table 3, Link count subfields (Link count 1 and Link count 2) are optional. For example, the Link count subfield may be omitted, and a bit in the link information (Link Info) field is used to identify the corresponding link as an added link or a deleted link. When there are Link count subfields (Link count 1 and Link count 2), the link count subfield and the bit in the link information (Link Info) field may be used in combination to ensure the decoding accuracy, that is, ensure the accuracy of the information related to adding and/or deleting at least one link. In other embodiments, if the link information (Link Info) field includes one or more bits for identifying the corresponding link as an added link or a deleted link, the first identification (Add link present) and the second identification (Delete link present) may also be optionally present.

For example, if there is a deleted link (there is no newly added link), the MLD MAC address presence identification (MLD MAC address present) may be set to, for example but not limited to, "0" to indicate that the MLD MAC address will not appear in, for example, the common information (Common Info) field of Table 1, and the link information (Link Info) field includes the Link ID/MAC address of the deleted link.

For example, if there is an added link (regardless of whether there is a deleted link), the MLD MAC address presence identification (MLD MAC address present) may be set to, for example but not limited to, "1" to indicate that the MLD MAC address will appear in the common information (Common Info) field, and the link information (Link Info) field includes the Link ID/AP MAC address of the added link. According to some embodiments of the disclosure, when there is an added link, the link information (Link Info) field may include information about performing an information transmission on the added link. For example, the link information (Link Info) field may include information such as a beacon frame interval.

Although it is illustrated in Table 3 that the first identification (Add link present) and the second identification (Delete link present) are located in different subfields, in other embodiments, the first identification and the third identification may be included in the same field, as illustrated in "Add link/Delete link present" in Table 4 below.

**Table 4 Bitmap present format**

| | | | | | |
|---|---|---|---|---|---|
| MLD MAC address present | Add link/Delete link present | Link count 1 | Link count 2 | NA | NA |

Referring to Table 4, the Add link/Delete link present subfield may be identified by, for example but not limited to, two bits. As a non-limiting example, when this subfield is set to "00", it may identify that there is an added link (Add); when this subfield is set to "01", it may identify that there is a deleted link (Delete); when this subfield is set to "11", it may identify that there are both an added link and a deleted link (Add & Delete); and similar to the embodiments described in Table 3, the corresponding number of one or more links may be set (for example, Link count 1, Link count 2). The MLD MAC address present subfield in Table 4 may also be similar to the embodiments described in Table 3. In order to avoid the redundancy, repeated descriptions are omitted herein.

Although Link count 1 and Link count 2 are illustrated in different subfields in Table 3 and Table 4, both may also be included in the same subfield. For example, in this subfield, higher bits may be used to identify the number of one or more added links and lower bits may be used to identify the number of one or more deleted links.

It may be understood that the embodiments in Tables 1 to 4 are only illustrative, rather than restrictive, and other content may be added into Tables 1 to 4, or part of content in Tables 1 to 4may be deleted, or the location of the content contained in Tables 1 to 4 may be changed. In addition, the number of bit(s) of each field or subfield described with reference to Table 1 to Table 4 is only illustrative, rather than restrictive, and the corresponding number of bit(s) may be changed according to actual applications.

According to some embodiments of the disclosure, by encapsulating the reconfigurable multi-link information element carrying an affiliated deleted and/or added AP (link) in the first message frame (a beacon frame, a probe response frame, an association response frame, a re-association response frame, or a newly defined action frame), and the frame is transmitted, so that the AP MLD may delete and/or add an attached AP at any time, improving the spectrum utilization rate and the system flexibility.

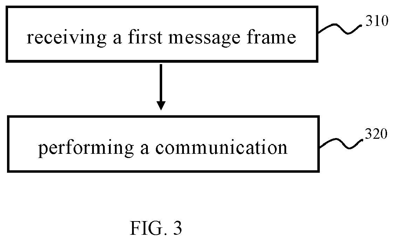

FIG. 3 is a flowchart illustrating a method for communication on multiple links according to some embodiments of the disclosure. The method for communication in FIG. 3 may be applied to a station supporting multi-link communication (non-AP STAMLD).

Referring to FIG. 3, in step 310, a first message frame may be received, in which the first message frame may include information related to adding and/or deleting at least one link.

According to some embodiments of the disclosure, the information may include the first identification and/or the second identification, for example, the Add link present subfield and the Delete link present subfield in Table 3 or the Add link/Delete link present subfield in Table 4. The first identification is configured to identify an addition of a new link and the second identification is configured to identify a deletion of an existing link.

According to some embodiments of the disclosure, the information may further include a third identification and/or a fourth identification, for example, Link count 1 and Link count 2 in Table 3 and Table 4. The third identification is configured to identify a number of one or more added links and the fourth identification is configured to identify a number of one or more deleted links.

According to some embodiments of the disclosure, the first identification and the third identification may be included in the same field, for example, the Add link/Delete link present subfield in Table 4.

According to some embodiments of the disclosure, the information may include a link information field, for example, the Link Info field in Table 1. The link information field may be configured to identify information of an added and/or deleted link.

According to some embodiments of the disclosure, in a case that there is an added link, the link information field may include information about performing an information transmission on the added link.

According to some embodiments of the disclosure, the information may include an MLD MAC address presence identification, for example, the MLD MAC address presence subfield in Table 4. The MLD MAC address presence identification is configured to indicate a presence of an MLD MAC address in the information.

According to some embodiments of the disclosure, in a case that there is an added link, the MLD MAC address presence identification is set to a first value to indicate that the MLD MAC address exists in the information; and in a case that there is a deleted link only, the MLD MAC address presence identification is set to a second value to indicate that the MLD MAC address does not exist in the information.

According to some embodiments of the disclosure, the information is in a form of a multi-link information element, as illustrated in Table 1. The multi-link information element includes a type identification for identifying reconfiguring the multi-link information element.

The embodiments described above with reference to Table 1 to Table 4 about the first message frame and the information carried therein may be applied to the method for communication in FIG. 3, and repeated descriptions are omitted herein to avoid the redundancy.

In step 320, a communication operation is performed according to the first message frame. For example, the non-AP STA MI,D may correspondingly add a link according to the information carried in the first message frame, and use the added link to communicate with the AP MLD (e.g., transmit/receive data, signals, keys, etc.). For example, the non-AP STA MLD may correspondingly delete the link according to the information carried in the first message frame, and no longer use the deleted link in subsequent communication operations.

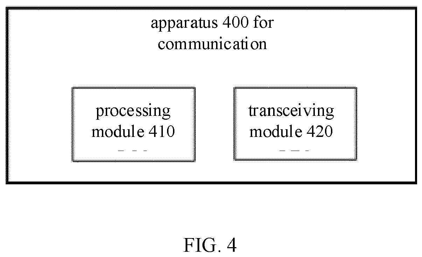

FIG. 4 is a block diagram illustrating an apparatus 400 for communication according to some embodiments of the disclosure.

Referring to FIG. 4, an apparatus 400 for communication may include a processing module 410 and a transceiving module 420. The apparatus illustrated in FIG. 4 may be applied to an AP MLD or a non-AP STA MLD.

In a case where the apparatus for communication illustrated in FIG. 4 is applied to an AP MLD, the processing module 410 may be configured to determine a first message frame, in which the first message frame may include information related to adding and/or deleting at least one link. The transceiver module 420 may be configured to transmit the first message frame. In this case, the apparatus 400 for communication may execute the method for communication described with reference to FIG. 2, and repeated descriptions are omitted herein for the brevity. In addition, the embodiments described above with reference to Table 1 to Table 4 about the first message frame and the information carried therein can be applied herein.

In a case where the apparatus for communication illustrated in FIG. 4 is applied to a non-AP STA MLD, the transceiver module 420 may be configured to receive a first message frame, in which the first message frame may include information related to adding and/or deleting at least one link. The processing module 410 may be configured to perform a communication operation according to the first message frame. In this case, the apparatus 400 for communication may execute the method for communication described with reference to FIG. 3, and repeated descriptions are omitted herein for the brevity. In addition, the embodiments described above with reference to Table 1 to Table 4 about the first message frame and the information carried therein may be applied herein.

In addition, the apparatus 400 for communication illustrated in FIG. 4 is only exemplary, and embodiments of the disclosure are not limited thereto. For example, the apparatus 400 for communication may also include other modules, such as a memory module. In addition, various modules in the apparatus 400 for communication may be combined into more complex modules, or may be divided into more individual modules.

The method for communication and the apparatus for communication according to the embodiments of the disclosure may enable the AP MLD to delete and/or add an affiliated AP at any time, thereby improving the spectrum utilization rate.

Based on the same principles as the method according to the embodiments of the disclosure, the embodiments of the disclosure also provide an electronic device including a processor and a memory. The machine readable instructions (which may also be referred to as "a computer program") are stored on the memory. The processor is configured to execute the machine readable instructions to perform the method described with reference to FIGS. 2 and 3.

According to embodiments of the present disclosure, a computer-readable storage medium with a computer program stored thereon is provided. When the computer program is executed by the processor, the methods described with reference to FIGS. 2 and 3 is performed.

According to some embodiments, the processor may be a logic box, a module, or a circuit, for implementing or executing various embodiments described in the disclosure, for example, a Central Processing Unit (CPU), a general processor, a Digital Signal Processor (DSP), an Application Specific Integrated Circuit (ASIC), a Field Programmable Gate Array (FPGA) or other programmable logic devices, a transistor logic device, a hardware component, or any combination thereof. The processor may also be a combination used to implement a computing function, for example, a combination consisting of one or more microprocessors, and a combination consisting of DSPs and microprocessors.

According to some embodiments, the memory may be, for example, a Read Only Memory (ROM), a Random Access Memory (RAM), an Electrically Erasable Programmable Read Only Memory (EEPROM), a Compact Disc Read Only Memory (CD-ROM) or other optical disc memories, optical disk memories (including compact disc, laser disc, CD-ROM, digital general disc, and Blu-ray disc), disk storage mediums or other magnetic storage devices, or any other medium that can be used to carry or store program codes in the form of instructions or data structures and can be accessed by a computer, which is not limited herein.

It should be understood that although steps in the flowchart of the accompanying drawings are illustrated sequentially as indicated by the arrows, the steps are not necessarily performed sequentially in the order indicated by the arrows. Unless explicitly stated otherwise in the disclosure, there is no strict sequential limitation on the execution of these steps, which may be performed in any other order. In addition, at least some of the steps in the flowchart of the accompanying drawings may include a plurality of sub-steps or a plurality of phases, which are not necessarily executed at the same time, but may be executed at different times. The execution order is not necessarily sequential, and the steps can be performed alternately or alternatively with other steps or at least part of sub-steps or phases of other steps.

Although the disclosure has been illustrated and described with reference to the embodiments of the disclosure, it will be understood by those skilled in the art that various changes in form and detail can be made without departing from the scope of the disclosure. Accordingly, the scope of the disclosure should not be limited by the embodiments, but should be defined by the appended claims and their equivalents.

## Claims

1. A method for communication on multiple links, performed by an access point supporting multi-link communication, the method comprising:
determining a first message frame, wherein the first message frame comprises information related to adding and/or deleting at least one link; and
transmitting the first message frame.

2. The method according to claim 1, wherein the information comprises a first identification and/or a second identification,
wherein the first identification is configured to identify an addition of a new link,
wherein the second identification is configured to identify a deletion of an existing link.

3. The method according to claim 2, wherein the information further comprises a third identification and/or a fourth identification,
wherein the third identification is configured to identify a number of one or more added links,
wherein the fourth identification is configured to identify a number of one or more deleted links.

4. The method according to claim 2, wherein the first identification and the third identification are comprised in a same field.

5. The method according to any one of claims 1 to 4, wherein the information comprises a link information field and the link information field is configured to identify information of an added and/or deleted link.

6. The method according to claim 5, wherein in a case that there is an added link, the link information field comprises information about performing an information transmission on the added link.

7. The method according to claim 2, wherein the information comprises a multi-link device (MLD) media access control (MAC) address presence identification,
wherein the MLD MAC address presence identification is configured to indicate a presence of an MLD MAC address in the information.

8. The method according to claim 7, wherein,
in a case that there is an added link, the MLD MAC address presence identification is set to a first value to indicate that the MLD MAC address exists in the information;
in a case that there is a deleted link only, the MLD MAC address presence identification is set to a second value to indicate that the MLD MAC address does not exist in the information.

9. The method according to claim 1, wherein the information is in a form of a multi-link information element,
wherein the multi-link information element comprises a type identification for identifying reconfiguring the multi-link information element.

10. A method for communication on multiple links, performed by a station supporting multi-link communication, the method comprising:
receiving a first message frame, wherein the first message frame comprises information related to adding and/or deleting at least one link; and
performing a communication operation according to the first message frame.

11. The method according to claim 10, wherein the information comprises a first identification and/or a second identification,
wherein the first identification is configured to identify an addition of a new link,
wherein the second identification is configured to identify a deletion of an existing link.

12. The method according to claim 11, wherein the information further comprises a third identification and/or a fourth identification,
wherein the third identification is configured to identify a number of one or more added links,
wherein the fourth identification is configured to identify a number of one or more deleted links.

13. The method according to claim 11, wherein the first identification and the third identification are comprised in a same field.

14. The method according to any one of claims 10 to 13, wherein the information comprises a link information field and the link information field is configured to identify information of an added and/or deleted link.

15. The method according to claim 14, wherein in a case that there is an added link, the link information field comprises information about performing an information transmission on the added link.

16. The method according to claim 11, wherein the information comprises a multi-link device (MLD) media access control (MAC) address presence identification,
wherein the MLD MAC address presence identification is configured to indicate a presence of an MLD MAC address in the information.

17. The method according to claim 16, wherein,
in a case that there is an added link, the MLD MAC address presence identification is set to a first value to indicate that the MLD MAC address exists in the information;
in a case that there is a deleted link only, the MLD MAC address presence identification is set to a second value to indicate that the MLD MAC address does not exist in the information.

18. The method according to claim 10, wherein the information is in a form of a multi-link information element,
wherein the multi-link information element comprises a type identification for identifying reconfiguring the multi-link information element.

19. An apparatus for communication on multiple links, implemented in an access point supporting multi-link communication, the apparatus comprising:
a processing module configured to determine a first message frame, wherein the first message frame comprises information related to adding and/or deleting at least one link; and
a transceiver module configured to transmit the first message frame.

20. An apparatus for communication on multiple links, implemented in a station supporting multi-link communication, the apparatus comprising:
a transceiver module configured to receive a first message frame, wherein the first message frame comprises information related to adding and/or deleting at least one link; and
a processing module configured to perform a communication operation according to the first message frame.

21. An electronic device, comprising a memory, a processor, and a computer program stored on the memory and runnable on the processor, wherein when the processor executes the computer program, the method according to any one of claims 1 to 9 or any one of claims 10 to 18 is performed.

22. A computer-readable storage medium with a computer program stored thereon, wherein the computer program implements the method according to any one of claims 1 to 9 or any one of claims 10 to 18 when executed by a processor.
